# EUROPÄISCHE PATENTSCHRIFT

(11) **EP 0 421 116 B1**
(45) Veröffentlichungstag und Bekanntmachung des Hinweises auf die Patenterteilung: **13.01.1993**
(21) Anmeldenummer: 90116341.0
(22) Anmeldetag: 27.08.1990
(51) Int. Cl.: F02B 27/00

(54) **Luftansauganlage einer Brennkraftmaschine**
Air intake system for a combustion engine
Système d'admission d'air pour moteur à combustion

(30) Priorität: 30.09.1989 DE 3932738
(43) Veröffentlichungstag der Anmeldung: 10.04.1991
(73) Patentinhaber: Dr.Ing.h.c. F. Porsche Aktiengesellschaft, 70435 Stuttgart (DE)
(72) Erfinder: Rutschmann, Erwin, Dipl.-Ing., D-7533 Tiefenbronn (DE); Breuer, Hans Georg, Dipl.-Ing., D-7531 Neuhausen-Steinegg (DE)

(56) Entgegenhaltungen:
- EP-A- 0 200 930
- EP-A- 0 312 810
- DE-A- 1 941 876
- DE-A- 2 322 175
- US-A- 3 024 774
- US-A- 4 763 612
- PATENT ABSTRACTS OF JAPAN vol. 13, no. 340 (M-857)(3688) 31 Juli 1989, & JP-A-1 117918 (MAZDA) 10 Mai 1989,
- PATENT ABSTRACTS OF JAPAN vol. 14, no. 42 (M-925)(3985) 25 Januar 1990, & JP-A-1 273827 (MAZDA) 01 November 1989,

## Beschreibung

Die Erfindung betrifft eine Luftansauganlage gemäß dem Oberbegriff des Anspruchs 1.

Eine Luftansauganlage für eine V-Brennkraftmaschine mit zwei Luftsammelbehältern ist aus der US-PS 4 763 612 bekannt. Hierbei wird die Ansaugluft stromab eines Luftfilters einflutig einer ersten Drosselklappe zugeführt, hinter der über eine erste Verzweigung die Luft zu je einer, einem Luftsammelbehälter zugeordneten zweiten Verzweigung gelangt. Von dieser Verzweigung aus strömt die Luft zweiflutig aus verschiedenen Richtungen in den Sammelbehälter, wobei eine erste Leitung durch eine zweite Drosselklappe verschließbar ist und eine zweite, als Umgehungsleitung ausgebildete Leitung ungedrosselt seitlich in den Sammelbehälter mündet.
Diese Register-Sauganlage schaltet lastabhängig ab Erreichen einer bestimmten Drehzahl zu der ständig geöffneten Umgehungsleitung die erste in den Sammelbehälter führende Leitung zu. Nachteilig bei dieser Sauganlage ist der zusätzliche Aufwand für die zweiten Drosselklappen und für deren Steuerung sowie die Tatsache, daß in bestimmten Drehzahlbereichen die dem Sammelbehälter zugeführte Luft gedrosselt wird, was immer einen Druckverlust zur Folge hat.

Beim Betrieb einer Brennkraftmaschine tritt einlaßseitig durch das Saugen der einzelnen Zylinder ein Unterdruck auf, d. h. im Ansaugsystem entsteht ein Bedarf an Luft, der mit steigenden Drehzahlen zunimmt.

Es ist die Aufgabe der Erfindung, die Luftansauganlage einer Brennkraftmaschine so zu gestalten, daß dadurch eine Leistungs- und Drehmomentsteigerung erzielt wird.

Die Lösung der Aufgabe gelingt durch die Anwendung der im kennzeichnenden Teil des Anspruchs 1 genannten Merkmale.

Die erfindungsgemäß Luftansauganlage sieht eine Anordnung vor, bei der alle Rohrstutzen so an den Sammelbehälter angeschlossen sind, daß die Ansaugluft ungedrosselt in diesen Behälter eintritt, wobei zwei Eintrittsöffnungen an sich gegenüberliegenden Seiten des Behälters angeordnet sind. Von dem Behälter aus führen einzelne Saugrohre zu den Einlaßkanälen im Zylinderkopf der Brennkraftmaschine. Vorteilhafterweise bewirkt das Verzweigen der zunächst durch eine gemeinsame Leitung strömenden Ansaugluft in mehrere Teilströme, die an räumlich getrennten Stellen in den Sammelbehälter führen, eine deutliche Leistungs- und Drehmomenterhöhung über einen weiten Drehzahlbereich der Brennkraftmaschine.

Diese Erhöhung tritt bevorzugt bei Brennkraftmaschinen auf, deren zeitliche Abstände der Ansaugtakte relativ groß sind, so daß sich ausgeprägte Druckschwankungen im Ansaugsystem aufbauen. Dieses ist bei vierzylindrigen Reihenbrennkraftmaschinen oder z.B. bei 8-zylindrigen V-Motoren mit 180° Zündabstand der Fall. Hierbei ist jeder Zylinderreihe eine eigene Luftansauganlage zugeordnet.

Bei der erfindungsgemäßen Luftansauganlage führt von der Verzweigung aus eine direkte Ansaugleitung sowie mindestens eine Umgehungsleitung in den Sammelbehälter.
Bei einer solchen Ausführung zeigt sich, das sich über den gesamten Ansaugweg der Luft, d.h. vom Luftfilter bis zu den Einlaßventilen der Brennkraftmaschine, eine harmonische Druckschwingung ausbildet, die sich in Phase mit der Kolbenbewegung in den Zylindern der Brennkraftmaschine befindet. Dadurch ergeben sich gegenüber bekannten Ausführungen mehrere Vorteile. Zum einen liegt zu Beginn eines jeden Einlaßtaktes vor dem jeweiligen Einlaßventil ein geringerer Druck vor, der nahezu dem Druck im Zylinder entspricht und der sich somit in Phase mit dem Druckverlauf im Zylinder befindet. Weiterhin liegt zum Zeitpunkt maximaler Kolbengeschwindigkeit über der gesamten Länge der Saugrohre vom Sammelbehälter bis zum Einlaßventil eine höhere Strömungsgeschwindigkeit vor. Dadurch strömt eine größere Luftmenge zu jedem Zylinder. Letztendlich liegt am Ende des Einlaßtaktes, wenn das Einlaßventil den Einlaßquerschnitt verringert, über der gesamten Länge der Saugrohre ein höherer Druck vor, der zu einer besseren Zylinderfüllung führt.
Weiterhin benötigt diese Umgehungsleitung keine Steuerung, da sie sich durch die geometrische Auslegung selber an- und abkoppelt. Durch das Anschließen von mehr als einer Umgehungsleitung und deren Auslegung auf verschiedene Drehzahlen der Brennkraftmaschine kann eine Leistungs- und Drehmomentsteigerung über einen weiteren Drehzahlbereich erzielt werden. Die einzelnen Umgehungsleitungen werden beim Durchfahren des Drehzahlbereiches der Brennkraftmaschine angekoppelt, erreichen bei der jeweils abgestimmten Drehzahl ihren maximalen Beitrag zur Druckerhöhung und koppeln sich bei weiterer Drehzahlsteigerung wieder ab.

Die Erfindung zeichnet sich somit durch einen einfachen Aufbau aus. Sie benötigt gegenüber den durch mehrere Drosselklappen gesteuerten, auf Resonanzaufladung ausgelegten bekannten Ansaugsystemen deutlich weniger Teile und weist somit Kosten-, Wartungs- und Gewichtsvorteile auf. In den Unteransprüchen 2 bis 11 sind weitere, die Erfindung vorteilhaft gestaltende Merkmale genannt. So führt eine Verzweigung der Ansaugluft unter einem kleinen Winkel, der 45° nicht überschreiten sollte, zu optimalen Ergebnissen. Ebenso vorteilhaft ist ein jeweils senkrechtes Einströmen der Ansaugluft in den Sammelbehälter. Bei einem zweiflutigen Einströmen in den Sammelbehälter sollten sich die beiden Einströmstellen gegenüberliegen, bei einer dreiflutigen Ausführung sollte die dritte Einströmstelle senkrecht zu den beiden sich gegenüberliegenden Einströmstellen liegen.

Ein bevorzugtes Ausführungsbeispiel der Erfindung wird im Anschluß an die nachfolgend aufgeführten Figuren näher erläutert.

Es zeigt:

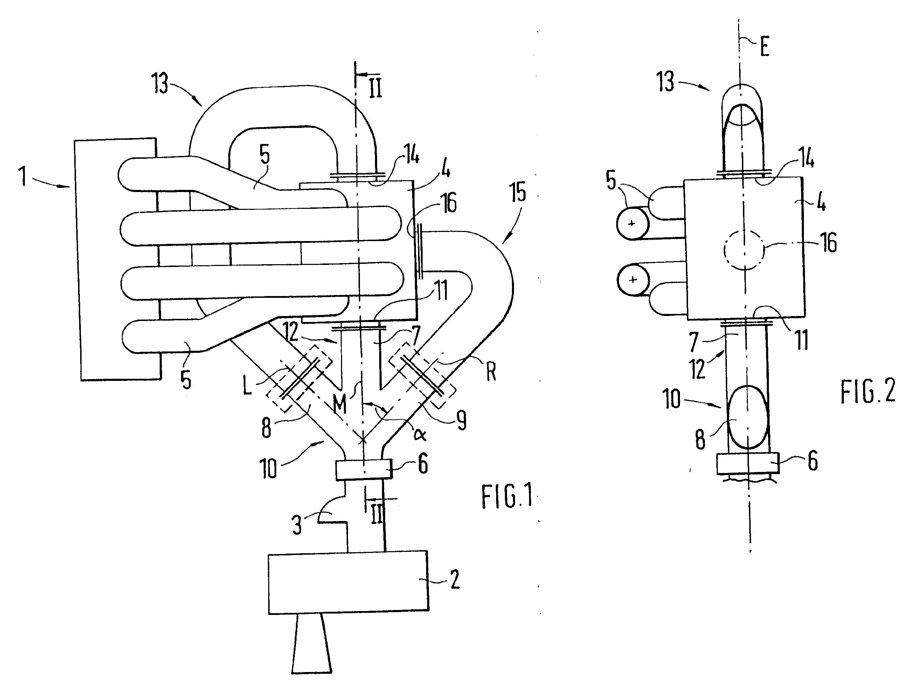

Fig. 1 eine schematische Ansicht einer Ausführung der Erfindung von oben,
Fig. 2 einen Schnitt entlang der Linie II-II der Fig. 1,
Fig. 3 ein Diagramm des Drehmomentverlaufes über der Drehzahl einer Brennkraftmaschine.

Die Luftansauganlage einer vierzylindrigen Brennkraftmaschine 1 weist einen Ansaugluftfilter 2, einen Luftmengenmesser 3, einen Sammelbehälter 4 sowie Saugrohre 5 auf, die vom Sammelbehälter 4 zu den nicht näher gezeigten und erläuterten Einlaßkanälen im Zylinderkopf der Brennkraftmaschine 1 führen. Die Leistungsregelung der Brennkraftmaschine 1 erfolgt über eine stromab des Luftmengenmessers 3, in einem Drosselklappenstutzen 6 angeordnete Drosselklappe. Im Anschluß daran ist eine mehrere Rohrstutzen 7, 8, 9 aufweisende Verzweigung 10 angeordnet. Dabei führt der Rohrstutzen 7 auf geradlinigem Weg die Luft in eine Eintrittsöffnung 11 des Sammelbehälters 4. Eine direkte Ansaugleitung 12 wird somit durch die Gestaltung der Rohrstutzen zwischen dem Drosselklappenstutzen 6 und der Eintrittsöffnung 11 festgelegt. An den winkeligen Rohrstutzen 8 der Verzweigung 10 ist eine erste Umgehungsleitung 13 angeschlossen. Diese Umgehungsleitung 13 ist um den Sammelbehälter 4 herumgeführt und mündet in einer Eintrittsöffnung 14 des Sammelbehälters 4. Die Mittelpunkte der Eintrittsöffnungen 11, 14 liegen auf einer gemeinsamen Achse M, die gleichzeitig Mittellängsachse der Verzweigung 10 ist. An den winkeligen Rohrstutzen 9 der Verzweigung 10 ist eine zweite Umgehungsleitung 15 angeschlossen, die in eine Eintrittsöffnung 16 des Sammelbehälters 4 mündet. Die zweite Umgehungsleitung 15 ist kürzer ausgeführt als die erste Umgehungsleitung 13 und mündet seitlich in den Sammelbehälter 4.

Die Einströmrichtung der durch die Eintrittsöffnung 16 strömenden Luft ist senkrecht zur Achse M. Die Mittellängsachsen L, R der Rohrstutzen 8, 9 sind in einem kleinen Winkel α zur Mittellängsachse M angeordnet und liegen in einer gemeinsamen Ebene E. Das Volumen des Sammelbehälters 4 sowie das der Umgehungsleitungen 13, 15 sind aufeinander und auf das Hubvolumen der Brennkraftmaschine 1 abgestimmt. Bei veränderten Abstimmbedingungen können die Umgehungsleitungen 13, 15 z.B. direkt auf der äußeren Oberfläche des Sammelbehälters 4 verlaufen und dabei einstückig mit dem Sammelbehälter 4 ausgeführt sein. Weiterhin können mehr als zwei Bypaßleitungen 13, 15 oder nur eine Umgehungsleitung parallel zu der direkten Ansaugleitung 12 angeordnet sein. Dabei weist die Verzweigung 10 eine dementsprechende Anzahl von Rohrstutzen auf. Ist aufgrund der beengten Raumverhältnisse nur ein zusätzlicher Rohrstutzen für eine erste Umgehungsleitung an der Verzweigung 10 anbringbar, so kann eine weitere Umgehungsleitung z.B. aus der ersten Bypaßleitung abgezweigt werden und zu einer weiteren Eintrittsöffnung des Sammelbehälters 4 geführt werden, die vorteilhaft gegenüberliegend der Eintrittsöffnung der ersten Bypaßleitung angeordnet ist.

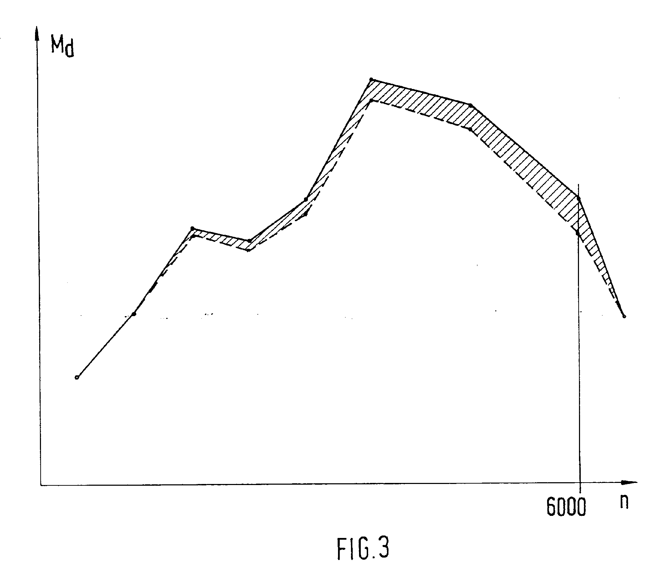

Fig. 3 zeigt in einem Diagramm vergleichend den Drehmomentverlauf über der Drehzahl für eine bekannte, einflutige Auslegung des Sammelbehälters 4 gestrichelt. Die durchgezogene Kurve repräsentiert eine erfindungsgemäße Ausführung mit einer Umgehungsleitung, die mit einer Länge von ca. 650 mm auf n = 6000 U/min. ausgelegt ist. Deutlich wird der mit der Drehzahl steigende Drehmomentgewinn, der schraffiert dargestellt ist und bei ca. 6000 U/min. sein Maximum erreicht. Die Drehmomentsteigerung beträgt ca. 8 Newtonmeter, die Leistungssteigerung ca. 6 Kilowatt.

## Patentansprüche

1. Luftansauganlage einer Brennkraftmaschine (1) mit mindestens einer Reihe von Zylindern, in der die Ansaugluft von einem Luftfilter aus zu jeder Reihe von Zylindern durch eine vorzugsweise als Luftmassenmesser (3) ausgebildete Meßeinrichtung und einen Drosselklappenstutzen (6) strömt wobei jeder Reihe ein einzelner Sammelbehälter (4) zugeordnet ist, der mittels Saugrohren (5) an einen Zylinderkopf der Brennkraftmaschine (1) angeschlossen ist, und wobei Ansaugluft stromab des Drosselklappenstutzens (6) einflutig einer Verzweigung (10) zugeführt wird, die über eine Umgehungsleitung (13) mit dem Sammelbehälter (4) verbunden ist, wobei die Verzweigung (10) mehrere Rohrstutzen (7, 8, 9) aufweist, die derart an den Sammelbehälter (4) angeschlossen sind, daß die Ansaugluft aus verschiedenen Richtungen in den Sammelbehälter (4) eintritt, dadurch gekennzeichnet daß die Ansaugluft durch alle Rohrstutzen (7, 8, 9) drosselfrei in den Sammelbehälter (4) eintritt, wobei zwei Eintrittsöffnungen (11, 14) an sich gegenüberliegenden Seiten des Sammelbehälters (4) angeordnet sind.

2. Luftansauganlage nach Anspruch 1, dadurch gekennzeichnet, daß die Verzweigung (10) einen geradlinig von dem Drosselklappenstutzen (6) zu dem Sammelbehälter (4) führenden Rohrstutzen (7) umfaßt.

3. Luftansauganlage nach Anspruch 2, dadurch gekennzeichnet, daß an die Verzweigung (10) winkelige Rohrstutzen (8, 9) als Teil von Umgehungsleitungen (13, 15) angeschlossen sind.

4. Luftansauganlage nach Anspruch 3, dadurch gekennzeichnet, daß die Umgehungsleitungen (13, 15) einstückig mit dem Sammelbehälter (4) ausgebildet sind.

5. Luftansauganlage nach Anspruch 3, dadurch gekennzeichnet, daß die Umgehungsleitungen (13, 15) als separate Verbindung zwischen den Rohrstutzen (8, 9) und dem Sammelbehälter (4) ausgebildet sind.

6. Luftansauganlage nach den Ansprüchen 3 bis 5, dadurch gekennzeichnet, daß die in den Sammelbehälter (4) einströmende Ansaugluft senkrecht zu den Sammelbehälter (4) umgebenden Wandungen einströmt.

7. Luftansauganlage nach Anspruch 3 oder 4, dadurch gekennzeichnet, daß die Mittellängsachsen (L, R) der Rohrstutzen (8, 9) einen spitzen Winkel (α) mit der Mittellängsachse (M) des direkten Rohrstutzens (7) umschließen.

8. Luftansauganlage nach Anspruch 6, dadurch gekennzeichnet, daß in den den Sammelbehälter (4) umgebenden Wandungen Eintrittsöffnungen (11, 14, 16) angeordnet sind.

9. Luftansauganlage nach Anspruch 8, dadurch gekennzeichnet, daß die Mittellängsachsen (L, M, R) der Rohrstutzen (7, 8, 9) in einer Ebene (E) liegen und daß die Mittelpunkte der Eintrittsöffnungen (11, 14, 16) in dieser Ebene (E) liegen.

10. Luftansauganlage nach Anspruch 9, für eine vierzylindrige Reihenbrennkraftmaschine mit einem Sammelbehälter, der eine nahezu quaderförmige Gestalt hat, dadurch gekennzeichnet, daß der Mittelpunkt der einer ersten Umgehungsleitung (13) zugeordneten Eintrittsöffnung (14) auf der Verlängerung der Mittellängsachse (M) und auf der der Eintrittsöffnung (11) gegenüberliegenden Seite des Sammelbehälters (4) liegt.

11. Luftansauganlage nach Anspruch 9, für eine vierzylindrige Reihenbrennkraftmaschine mit einem Sammelbehälter, der eine nahezu quaderförmige Gestalt hat, dadurch gekennzeichnet, daß der Mittelpunkt der einer ersten Umgehungsleitung (13) zugeordneten Eintrittsöffnung (14) auf der Verlängerung der Mittellängsachse (M) und auf der der Eintrittsöffnung (11) gegenüberliegenden Seite des Sammelbehälters (4) liegt, und daß die Richtung der durch die einer zweiten Umgehungsleitung (15) zugeordneten Eintrittsöffnung (16) einströmende Ansaugluft quer zu der Mittellängsachse (M) verläuft.

12. Luftansauganlage nach Anspruch 10 oder 11, dadurch gekennzeichnet, daß die Länge der Umgehungsleitung (13) zwischen 550 mm und 750 mm beträgt.

13. Luftansauganlage nach Anspruch 12, dadurch gekennzeichnet, daß die erste Umgehungsleitung (13) eine größere Länge aufweist als die zweite Umgehungsleitung (15).

## Claims

1. An air-intake system of an internal combustion engine (1) having at least one row of cylinders in which the intake air flows from an air filter to each row of cylinders through a measuring device - preferably constructed as an air-mass meter (3) - and a butterfly-valve connexion (6), each row having associated therewith an individual collecting tank (4) connected to a cylinder head of the internal combustion engine (1) by means of intake pipes (5), intake air being supplied downstream of the butterfly-valve connexion (6) in a single flow to a branch (10) connected to the collecting tank (4) by way of a by-pass line (13), and the branch (10) comprising a plurality of pipe connexions (7, 8, 9) connected to the collecting tank (4) in such a way that the intake air enters the collecting tank (4) from different directions, characterized in that the intake air enters the collecting tank (4) through all the pipe connexions (7, 8, 9) in a throttlefree manner, two inlet openings (11, 14) being arranged on mutually opposite sides of the collecting tank (4).

2. An air-intake system according to Claim 1, characterized in that the branch (10) comprises a pipe connexion (7) leading in a straight line from the butterfly-valve connexion (6) to the collecting tank (4).

3. An air-intake system according to Claim 2, characterized in that angled pipe connexions (8, 9) are connected as part of by-pass lines (13, 15) to the branch (10).

4. An air-intake system according to Claim 3, characterized in that the bypass lines (13, 15) are constructed integrally with the collecting tank (4).

5. An air-intake system according to Claim 3, characterized in that the bypass lines (13, 15) are [each] constructed as a separate connexion between the pipe connexions (8, 9) and the collecting tank (4).

6. An air-intake system according to Claims 3 to 5, characterized in that the intake air flowing into the collecting tank (4) flows in at right angles to the walls surrounding the collecting tank (4).

7. An air-intake system according to Claim 3 or 4, characterized in that the median longitudinal axes (L, R) of the pipe connexions (8, 9) form an acute angle (α) with the median longitudinal axis (M) of the direct pipe connexion (7 ).

8. An air-intake system according to Claim 6, characterized in that inlet openings (11, 14, 16) are provided in the walls surrounding the collecting tank (4).

9. An air-intake system according to Claim 8, characterized in that the median longitudinal axes (L, M, R) of the pipe connexions (7, 8, 9) lie in one plane (E), and the centres of the inlet openings (11, 14, 16 ) lie in this plane (E).

10. An air-intake system according to Claim 9, for a four-cylinder in-line internal combustion engine having a collecting tank with an almost cuboid shape, characterized in that the centre of the inlet opening (14) associated with a first by-pass line (13) lies on the extension of the median longitudinal axis (M) and on the side of the collecting tank (4) opposite the inlet opening (11 ).

11. An air-intake system according to Claim 9, for a four-cylinder in-line internal combustion engine having a collecting tank with an almost cuboid shape, characterized in that the centre of the inlet opening (14) associated with a first by-pass line (13) lies on the extension of the median longitudinal axis (M) and on the side of the collecting tank (4) opposite the inlet opening (11), and the direction of the intake air flowing in through the inlet opening (16) associated with a second by-pass line (15) extends transversely to the median longitudinal axis (M).

12. An air-intake system according to Claim 10 or 11, characterized in that the length of the by-pass line (13) is between 550 mm and 750 mm.

13. An air-intake system according to Claim 12, characterized in that the first by-pass line (13) has a length greater than the second by-pass line (15).

## Revendications

1. Système d'admission d'air d'un moteur à combustion interne (1) comportant au moins une série de cylindres, dans lequel l'air d'admission s'écoule à partir d'un filtre à air vers chaque série de cylindres, à travers un dispositif de mesure, conçu de préférence sous la forme d'un dispositif de mesure de masse d'air (3), et une tubulure de clapet d'étranglement, dans lequel à chaque série est associé un clapet d'étranglement, dans lequel à chaque série est associé un collecteur (4) individuel qui est raccordé à une culasse de cylindre du moteur à combustion interne (1), au moyen de tuyaux d'admission (5) et dans lequel de l'air d'admission est envoyé en aval de la tubulure de clapet d'étranglement (6) à un embranchement (10) qui est relié au collecteur (4), par un conduit de dérivation (13), dans lequel l'embranchement (10) comporte plusieurs tubulures (7, 8, 9) qui sont raccordées au collecteur (4) de manière que l'air d'admission pénètre dans le collecteur (4), à partir des différentes directions, caractérisé en ce que l'air d'admission pénètre dans le collecteur (4), non étranglé, à travers les tubulures (7, 8, 9), deux orifices d'entrée (11, 14) étant prévus sur des côtés opposés du collecteur (4).

2. Système d'admission d'air selon la revendication 1, caractérisé en ce que l'embranchement (10) comprend une tubulure (7) menant en ligne droite de la tubulure de clapet d'étranglement (6) au collecteur (4).

3. Système d'admission d'air selon la revendication 2, caractérisé en ce que des tubulures (8, 9) coudées, faisant partie des conduits de dérivation (13, 15), sont raccordées à l'embranchement (10).

4. Système d'admission d'air selon la revendication 3, caractérisé en ce que les conduits de dérivation (13, 15) sont réalisés d'une seule pièce avec le collecteur (4).

5. Système d'admission d'air selon la revendication 3, caractérisé en ce que les conduits de dérivation (13, 15) sont conçus comme une liaison séparée entre les tubulures (8, 9) et le collecteur (4).

6. Système d'admission d'air selon les revendications 3 à 5, caractérisé en ce que l'air d'admission entrant dans le collecteur (4) pénètre perpendiculairement aux parois entourant le collecteur (4).

7. Système d'admission d'air selon la revendication 3 ou 4, caractérisé en ce que les axes médians longitudinaux (L, R) des tubulures (8, 9) forment un angle aigu (α) avec l'axe médian longitudinal (M) de la tubulure (7) directe.

8. Système d'admission d'air selon la revendication 6, caractérisé en ce que des orifices d'entrée (11, 14, 16) sont prévus dans les parois entourant le collecteur (4).

9. Système d'admission d'air selon la revendication 8, caractérisé en ce que les axes médians longitudinaux (L, M, R) des tubulures (7, 8, 9) se situent dans un plan (E) et en ce que les centres des orifices d'entrée (11, 14, 16) se situent dans ce plan (E).

10. Système d'admission d'air selon la revendication 9, pour un moteur à combustion interne de série à quatre cylindres comportant un collecteur qui a une forme à peu près parallélépipédique, caractérisé en ce que le centre de l'orifice d'entrée (14), associé à un premier conduit de dérivation (13), se situe sur le prolongement de l'axe médian longitudinal (M) et sur le côté, opposé à l'orifice d'entrée (11), du collecteur (4).

11. Système d'admission d'air selon la revendication 9, pour un moteur à combustion interne de sérié à quatre cylindres comportant un collecteur qui présente une forme à peu près parallélépipédique, caractérisé en ce que le centre de l'orifice d'entrée (14), associé au premier conduit de dérivation (13), se situe sur le prolongement de l'axe médian longitudinal (M) et sur le côté, opposé à l'orifice d'entrée (11), du collecteur (4) et en ce que la direction de l'air d'admission pénétrant par l'orifice d'entrée (16), associé à un second conduit de dérivation (15), s'étend transversalement à l'axe médian longitudinal (M).

12. Système d'admission d'air selon la revendication 10 ou 11, caractérisé en ce que la longueur du conduit de dérivation (13) est comprise entre 550 mm et 750 mm.

13. Système d'admission d'air selon la revendication 12, caractérisé en ce que le premier conduit de dérivation (13) est plus long que le second conduit de dérivation (15).
